# EUROPEAN PATENT SPECIFICATION

(11) **EP 3 491 743 B1**
(45) Date of publication and mention of the grant of the patent: **22.01.2020**
(21) Application number: 17736973.3
(22) Date of filing: 13.07.2017
(51) Int. Cl.: H04B 3/54, H05B 37/02

(54) **SYSTEM AND METHOD FOR POWERING AND COMMUNICATING WITH MULTIPLE FIXTURES**
SYSTEM UND VERFAHREN ZUR STROMVERSORGUNG UND KOMMUNIKATION MIT MEHREREN EINRICHTUNGEN
SYSTÈME ET PROCÉDÉ DESTINÉS À ALIMENTER ET À COMMUNIQUER AVEC DES APPAREILS MULTIPLES

(30) Priority: 26.07.2016 US 201662367017 P; 29.08.2016 EP 16186124
(43) Date of publication of application: 05.06.2019
(73) Proprietor: Signify Holding B.V., 5656 AE Eindhoven (NL)
(72) Inventor: MILLS, George, Bradley, 5656 AE Eindhoven (NL)
(74) Representative: Verweij, Petronella Daniëlle
(86) International application number: PCT/EP2017/067726
(87) International publication number: WO 2018/019604

(56) References cited:
- US-A1- 2002 109 585
- US-A1- 2014 225 436

## Description

### FIELD OF THE INVENTION

This invention relates to a system and method for powering and communicating with multiple fixtures. By way of example, it relates to a lighting system for powering and controlling a set of luminaires.

### BACKGROUND OF THE INVENTION

Lighting control systems are known which provide data communication to lighting fixtures using a single-ended data signal referenced to the neutral wire that is used as a reference conductor for delivering AC power to lighting fixtures. The lighting fixtures may be connected in a series or in a parallel connection. Regardless of the downstream configuration of the wiring in the installation, the data signal is connected in parallel fashion to all downstream fixtures.

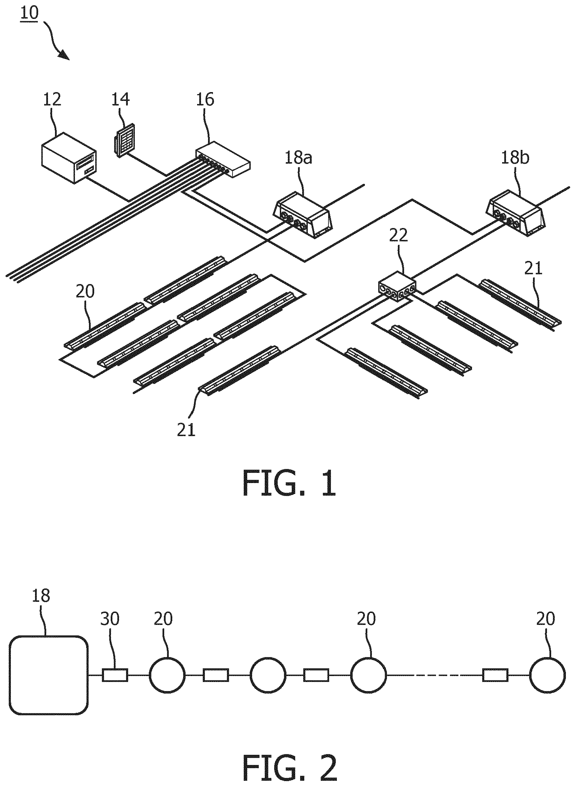

Figure 1 shows an example of such a lighting system 10. The system has a central controller 12 and a central controller user input device 14, such as a keypad. In the example shown, then connect to an Ethernet switch 16 which conveys control data to local controllers 18a, 18b (these are sometimes known as "Data Enablers"). Of course other connection schemes may be used.

Each local controller 18a, 18b receives AC power as a mains line and a neutral line. The local controller provides AC power to an associated set of lighting fixtures 20 over a cable including a mains (or "Line") wire and a neutral wire which functions as a reference. The local controller also provides data communication over a separate data line. The cable may also include a protective earth line.

Local controller 18a is shown connected to a series chain of lighting fixtures 20 (i.e. luminaires) and local controller 18b is shown connected to a star arrangement of lighting fixtures 21, making use of a junction box 22.

Regardless of the wiring configuration used to connect the fixtures, the signal quality can be affected by a number of factors including impedance variations (which affects signal quality and supported bandwidth), noise, and voltage drops.

Impedance variation issues are resolved by limiting the longest length of the wire from the local controller to the farthest fixture in the installation. This is a function of the type of cable used and the physical realities of the way that electrical signals travel in the cable medium.

Noise issues are minimized by using a voltage swing that is sufficiently large to ensure a high signal to noise ratio. Electromagnetic compatibility issues are minimized by controlling signal edge rates.

This known arrangement minimizes voltage drops in the power line by providing the mains voltage through to the individual fixtures. However, voltage drops are still present and must be considered in system design.

There are four primary considerations that limit the number of fixtures and the maximum length of a run of fixtures.

A first consideration is that the total circuit current has a limit. The limit must not exceed any of the following limiting factors:
a current limit resulting from installation limitations of the circuit, for example dependent on the building wiring;
the maximum current of the local controller (e.g. 16 amps);
a cable maximum current; and
a connector maximum current.

A second consideration is that the voltage drop in the cable must not lead to insufficient operating voltages for the fixture. Most fixtures operate on universal mains (from 100VAC up to 277VAC), so unless the system is operating from a 100VAC mains supply, this is usually not a limiting factor.

A third consideration is the voltage drops in the cable should not lead to signal degradation that prevents proper operation of the fixture in response to data signal commands.

A fourth consideration is that the number of individually addressed fixtures required in a system may be a limitation if it exceeds the number of slots in a multiplexing system (e.g. DMX512). This is often not a limiting factor, but if the number of channels per fixture is high, or if the fixtures are required to run in a high bandwidth (e.g. 16 bit) mode, or if the fixture power consumption is low, it may become a limiting factor.

This invention is directed in particular to the third consideration above relating to the data signaling aspect. This is often the limiting factor in determining a system run length.

US 2014/0225436 discloses an electrical control system consisting of two or more electrical transmitting devices each capable of transmitting synchronized messages consisting of electrical pulses to devices connected to one or more of the three phases of the AC power lines in a typical three phase power system. The synchronized transmitters are each connected to neutral and to one or more of the three phases, A, B, and C, or across two of the phases, of different circuit breaker panels in a typical three phase power system, and are capable of transmitting messages to one or more of the three phases. The transmissions from the two or more transmitters are synchronized such that the transmitted pulses from each transmitter are transmitted at the same time to produce a message that can be received correctly at any receiving device connected to any of the connected circuit breaker panels.

US 2002/0109585 discloses a reconditioning system for extending the reach of a RF communication signal using a high voltage cable and a neutral conductor as a communication channel. A reconditioner of the reconditioning system is either a repeater or a regenerator and is coupled to the high voltage cable using novel high voltage couplers. The system has an isolation filter for segmenting the high voltage cable in order to limit interference of RP signals on different parts of the high voltage cable.

### SUMMARY OF THE INVENTION

The invention is defined by the claims.

According to examples in accordance with an aspect of the invention, there is provided a system controller for powering and communicating with a set of fixtures using an AC cable comprising a power line, a reference line and a data line, and adapted to communicate with fixtures at different positions along the cable and each powered by the local voltage difference between the power line and the reference line, wherein the system controller comprises:
a control unit for communicating with the set of fixtures by providing a data signal over the data line, wherein the data signal for a fixture is defined by the local voltage difference between the data signal on the data line and the reference line or power line; and
a compensation circuit for adding a voltage offset waveform to the data signal which is dependent on the overall set of positions of the fixtures.

The term "local" in this context means at the location of the fixture. This system controller is for a system in which the data signal is referenced to the reference line or power line, for example referenced to a mains neutral line. Voltage drops along the neutral line, for example resulting from the large drive currents to the fixtures (rather than the small data signal currents) have an effect on the data signal.

By providing a voltage offset waveform (i.e. a time-varying offset voltage), a pre-compensation system is provided, so that the data signal can be correctly received and interpreted when received at the fixtures and referenced to the local reference line (or power line). This makes the system more tolerant to the effects of noise which can be exacerbated by common mode voltages in the system. The compensation takes account of the overall positions of the fixtures, for example the range of distances of the fixtures along the cable. In this way, compensation can be provided which improves data signal reception at the overall set of fixtures.

It also means that limits on the number of fixtures that can be connected to a single data supply can be increased. This reduces installation costs by minimizing the number of data supplies (local controllers) in a given installation and can simplify the system data wiring as fewer data supplies will result in fewer data communications cables.

In existing systems, when luminaires, individually identified by serial numbers, are installed in a linear fashion their order cannot be easily determined and system commissioning becomes a manual process. This is because the data signal runs in parallel to each of the luminaires. By detecting a line voltage drop at each luminaire an automatic method of determining relative positions on the AC cable is enabled during system commissioning.

The voltage offset waveform is for example in phase with the AC power supply current provided to the power line. In this way, the voltage offset increases in response to increased current flowing along the power line (and returning along the reference line). The voltage offset waveform thus compensates for the AC variation of the voltage at the fixture resulting from the current flowing along the line to which the data signal is referenced.

The voltage offset waveform may also compensate for a DC voltage drop on the line to which the data signal is referenced. In this way, the data signal is correctly positioned relative to the threshold level at the receiving fixture.

The magnitude of the voltage offset waveform is for example proportional to the current flowing on the line to which the data signal is referenced. In this way, the voltage offset waveform reacts to different current being drawn by the fixtures and then passing along the line to which the data signal is referenced. By "magnitude" is meant the AC signal magnitude, i.e. half of the peak-to-peak excursion of the signal.

The magnitude of the voltage offset waveform may be equal to the average of the lowest and highest expected system voltage drop on the line to which the data signal is referenced at the complete set of fixtures.

These measures provide a compensation waveform which can still result in a data signal which can be reliably interpreted at all of the fixtures.

In one example, the controller may be adapted to derive the voltage offset waveform based on the expected load and the phase of the input power line signal. This approach avoids the need for measurements of the load (i.e. the fixtures) and thus provides a simple feedforward approach.

In another example, the system controller further comprises a feedback system for measuring a current flowing on the line to which the data signal is referenced, a gain controlled amplifier which has a gain which is dependent on the measured current, and a modulating arrangement for modulating the data signal based on the output of the gain controlled amplifier. The measured current is indicative of the level of the voltage drops along the line to which the data signal is referenced between the system controller and the fixtures. The gain controlled amplifier then provides an output signal which varies with the current level. The output signal may for example be used to set the ground reference in an output circuit which outputs the data signal. This provides the modulation function.

The controller may be adapted to implement an installation procedure, which comprises measuring the voltage drop on the line to which the data signal is referenced at each fixture. This may be achieved for example by coupling the line to which the data signal is referenced to the data line locally at the fixture. Measurement of the voltage on the data line (with a low current) then becomes equivalent to measurement of the voltage on the line to which the data signal is referenced at the location of the fixture.

The controller may be adapted to implement a diagnostic mode for detecting voltage drops at each fixture. These voltage drops provide an indication of the electrical characteristics of the fixtures.

The fixtures for example comprise luminaires, so that the system controller is part of a lighting system.

The invention also provides a system comprising:
an AC cable comprising a power line, a reference line and a data line;
a set of fixtures at different positions along the cable and powered by the local voltage difference between the power line and the reference line; and
a system controller as defined above.

Again, the fixtures may comprise luminaires.

Examples in accordance with another aspect of the invention also provide a method of powering a set of fixtures, each of which is connected to an AC cable comprising n power line, a reference line and a data line and positioned at different positions along the cable, powered by the local voltage difference between the power line and the reference line, wherein the method comprises:
providing an AC power supply voltage to the power line;
providing a data signal for communicating with the set of fixtures;
adding a voltage offset waveform to the data signal which is dependent on the overall set of positions of the fixtures thereby to modify the data signal; and
providing the modified data signal over the data line, wherein the data signal for a fixture is defined by the local voltage difference between the data signal on the data line and the reference line or power line.

In this method, a voltage offset waveform is added to a data signal to compensate for voltage drops across a line to which the data signal is referenced.

The method may comprise providing a voltage offset waveform which is in phase with the AC power supply voltage.

A magnitude of a peak of the voltage offset waveform may for example be set to be proportional to the current flowing on the line to which the data signal is referenced.

The method may further comprise measuring a current flowing on the line to which the data signal is referenced, and amplifying a signal with a gain which is dependent on the measured current, and using the amplified signal to derive the voltage offset function. There may also be an installation procedure, during which the voltage drop on the line to which the data signal is referenced at each fixture is measured.

### BRIEF DESCRIPTION OF THE DRAWINGS

Examples of the invention will now be described in detail with reference to the accompanying drawings, in which:
Fig. 1 shows a lighting system;
Fig. 2 shows how voltage drops arise along a chain of fixtures;
Fig. 3 shows waveforms to explain the operation of the lighting system;
Fig. 4 shows a known system controller for a set of lighting fixtures;
Fig. 5 shows a first example of a system with an additional compensation function in the local controller;
Fig. 6 shows a second example of a system with an additional compensation function in the local controller;
Fig. 7 shows waveforms to explain the operation of the system of Fig. 5 or 6; and
Fig. 8 shows control method.

### DETAILED DESCRIPTION OF THE EMBODIMENTS

The invention provides a system (and system controller, and control method) having powering of, and communication with, a set of fixtures using an AC cable having a power line (e.g. a mains live wire), a reference line (e.g. a mains neutral wire) and a data line (wire). Fixtures are at different positions along the cable, each powered by the local voltage difference between the power line and the reference line. A system controller provides a data signal over the data line, wherein the data signal for a fixture is defined by the local voltage difference between the data signal on the data line and the reference line (or the power line). In order to compensate for voltage drops along the line to which the data signal is referenced, a compensation circuit adds a voltage offset waveform to the data signal which is dependent on the overall set of positions of the fixtures. This enables an increased number of fixtures and/or reach of the fixtures connected to the system controller.

There is often a desire to operate as many fixtures as possible with a single local controller (known as a "data enabler") as it minimizes installation cost overhead and simplifies installation. However, signal degradation as a result of voltage drops in the cables provides a limitation to the number of fixtures that can be used.

Figure 2 shows a schematic representation of a fixture installation where fixtures 20 are connected in a series configuration to a local controller 18. The resistors 30 represent the cable resistance between each fixture and in the leader cable connected between the local controller and the first fixture.

As explained above, the system has the data signal passed in a data line of the same cable that supplies AC power to the fixture (over a mains live line ("power line") and a neutral line ("reference line"). This provides a simple configuration. The data signal is for example referenced to the neutral line although it may instead be referenced to the power line. The three "lines" are separate wires which together form the AC cable.

By way of example, to minimize noise issues, the magnitude of the data signal may be 24V. The edges of the signal are controlled to prevent excessive electrical noise generation. The signal may for example run at 250 kbits per second, the same rate as a standard digital multiplex ("DMX" or "DMX512") system. Because the currents that flow in the data signal are low, there is negligible voltage drop in the data signal from the first fixture to the last. This is not the case however with the neutral and live signals that provide power to the fixture. Because there is a voltage drop along the length of the fixture string in the neutral signal line (for the case that the data signal is referenced to the neutral line), the data signal as viewed by the fixture becomes more and more distorted as the voltage drop increases. The fixture sees the local data signal voltage, namely the difference between the data signal voltage and the neutral voltage at the location of the fixture.

For a data signal as a digital signal with a total excursion of 24V, the fixture has a threshold at its input of +12V. A comparator processes the signal and outputs a "1" if the voltage is above +12V, and a "0" if the signal is below +12V.

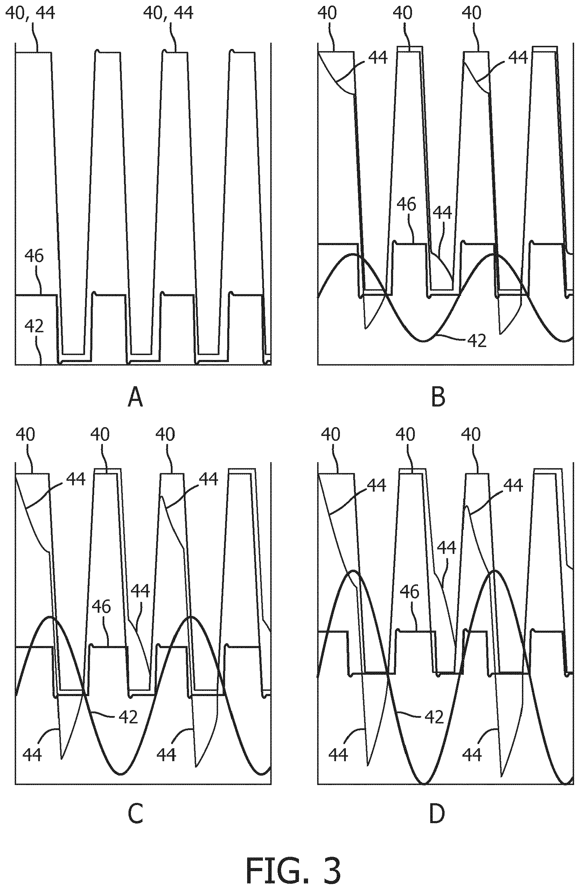

Figure 3 shows what the data signal looks like at the different fixtures with various peak to peak voltage drops at the fixture. It is assumed from this point that the data signal is referenced to the neutral line.

Figure 3A shows no voltage drop on the neutral line, Figure 3B shows a voltage drop of 4V, Figure 3C shows a voltage drop of 8V and Figure 3D shows a voltage drop of 12V.

In each case, the plot 40 is the data signal generated at the local controller and provided on the data line.

Plot 42 is the neutral line voltage drop (it is zero in Figure 3A). The voltage drop is in phase with the AC mains signal, because the current and voltage vary sinusoidally. The magnitude of the AC voltage drop signal increases in magnitude as the distance of the fixture increases. Thus Figures 3A to 3D represent increasingly distant fixtures from the local controller.

Plot 44 is the data signal as seen by the fixture, which is derived from the difference between the local neutral line voltage and the data voltage (which remains essentially constant along the data line as a result of the small current needed). It is based on the voltage difference between plots 40 and 42.

Plot 46 is the data signal as reconstituted in the fixture, based on the threshold comparator operation.

In Figure 3, the data signal with a nominal frequency for example 250 kb/sec. The frequency of the voltage drop is normally 60Hz (or 50Hz), but in these diagrams, the frequency has been increased to 60kHz for illustrative purposes (so that individual cycles of both signals may be seen). It can be seen that the data signal is well reconstructed at 0V and 4V of voltage drop, and is functional at 8V of voltage drop. However, the signal distortion at 12V of voltage drop is large enough that reliable data communication may no longer be possible.

The invention provides a circuit that adds a compensating voltage offset waveform to the data signal. The offset is made to be proportional to the voltage drop experienced at the receiving fixtures, in particular the average voltage drop.

In order to determine the required offset signal, the voltage drops experienced at each installation are obtained during commissioning of the system. These voltage drops depend in part on the positions of the fixtures, so that the overall set of positions can be used to define a compensation function which is most appropriate for the set of fixtures as a whole. In systems where the fixtures are serially connected, the relative ordering of the fixtures may also be determined during such commissioning based on the voltage drop information for each fixture.

The magnitude of the correction signal voltage can then be chosen to optimize the overall system reliability amongst a large number of receiving fixtures.

Furthermore, the same system may determine system health of the data transmission system for the purposes of identifying potential system failures. This may be determined based on analysis of the distribution of voltage drops in the system as determined during the installation procedure (which is described further below).

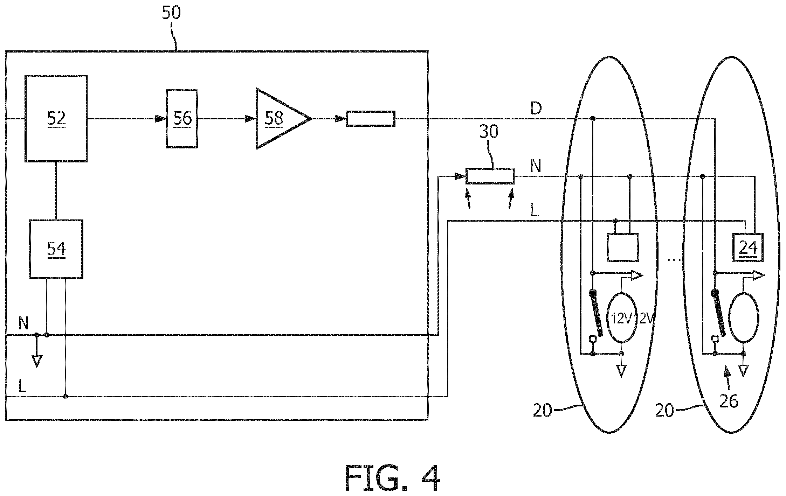

Figure 4 shows an example of a standard local controller.

It comprises a data and power supply 50 having a microprocessor 52 with an external data interface, and an isolated power supply 54 for supplying power to the microprocessor. The isolated power supply connects to the live and neutral lines L, N.

These lines L, N connect to the fixtures 20 at different positions along the cable which includes the live, neutral and data lines. Each fixture has a local power supply 24 and a data signal extraction circuit 26 for generating the reconstructed data signal. One of the resistive elements 30 of the neutral line is shown. These elements are not added components, but they represent the unavoidable resistance in the wires that create the undesired voltage drops.

The data provided by the microprocessor 52 is provided through an isolator 56 and amplifier 58 to the data line D. The isolator and amplifier are referenced to neutral N which functions as their ground signal. The amplifier functions as an output circuit which outputs the data signal. The cable extends to the fixtures in a single ended manner.

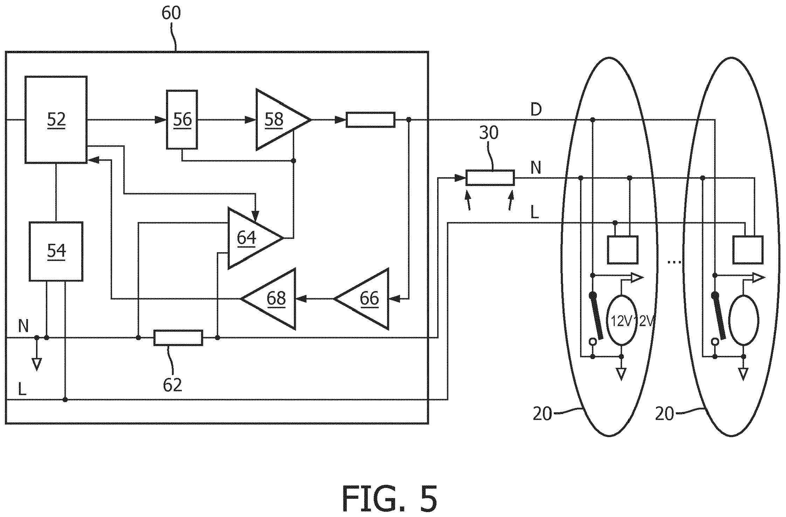

Figure 5 shows the modified data and power supply 60 with data signal compensation. The same elements as in Figure 4 are given the same numerals, namely the microprocessor 52, isolated power supply 54, isolator 56, amplifier 58 and live, neutral and data lines L, N, D.

A first additional aspect is the monitoring of the current flowing on the neutral line N. For this purpose, a current sense resistor 62 is provided. The voltage across the current sense resistor is provided to an amplifier 64 with variable gain. Other current measuring techniques maybe used, such as a current transformer or trace resistance.

The output of this amplifier functions as the ground reference for the amplifier 58 and isolator 56 so that the effective data signal voltage offset is altered in dependence on the output from the amplifier 64. This setting of the ground reference achieves a modulation of the voltage offset waveform over the clean data signal. Other modulation approaches are however possible.

The variable gain setting of the amplifier 64 is controlled by the microprocessor 52.

In this way, the neutral line current is taken into account, which influences the voltage drops along the neutral line.

The optimal voltage offset will be different depending on which fixtures are turned on. However, an approach which simply tracks the total current still results in improved results.

In a more advanced scenario, the controlling microprocessor could keep track of which fixtures are on and adjust the gain appropriately. This would provide a dynamic gain adjustment with continual calculations in the processing unit which knows the state of each individual fixture (i.e. luminaire). This would of course result in a more complex scheme. It would then not require feedback measurement of the current flowing, as this could instead be predicted.

The system also takes account of the set of locations of the fixtures. For this purpose, a calibration or installation procedure is followed. For this installation procedure, the voltage on the data line is measured. The data line D connects to a buffer 66 and an analogue to digital converter 68 which provides its output to the microprocessor 52.

The fixture, on command from the local controller, pulls the data line D to its own ground with a very low output impedance. The local ground at the fixture is at the potential of the neutral line N at the location of the fixture. By measuring the data signal during the time the data line is pulled to ground, the output impedance of the local controller is high enough that the low impedance of the fixture dominates and what is seen at the sensing circuit (i.e. the data signal) is equal to the neutral voltage at the fixture.

In this way, during an installation procedure, the voltage drops at different fixtures can be measured.

A maximum voltage drop to be expected can be determined by turning on all fixtures during this testing process.

The scheme described above relies on the fact that the output impedance of the local amplifier is high enough for accurate measurement. Circuitry could be added to increase the local amplifier output impedance even more during the measurement time in order to better detect the voltage drop.

The approach of Figure 5 is based on a feedback current measurement so that the current resulting from the operating states of the fixtures is measured.

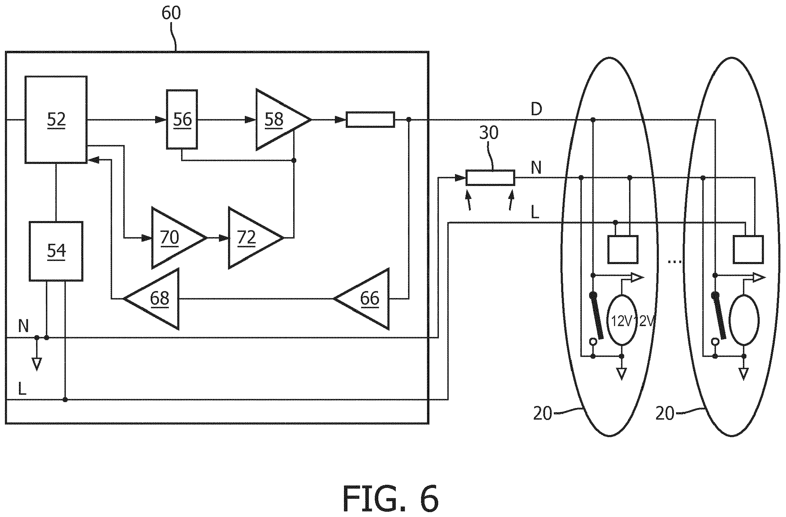

Figure 6 shows an alternative approach. The same elements as in Figure 5 are given the same numerals, namely the microprocessor 52, isolated power supply 54, isolator 56, amplifier 58 and live, buffer 66, analog to digital converter 68, and live, neutral and data lines L, N, D.

In this example, a signal is generated via a digital to analog converter 70 to control the voltage compensation using a fixed gain amplifier 72. This version does not use neutral line current detection but is instead based on a knowledge of the drive levels of the fixtures and hence the total current flowing.

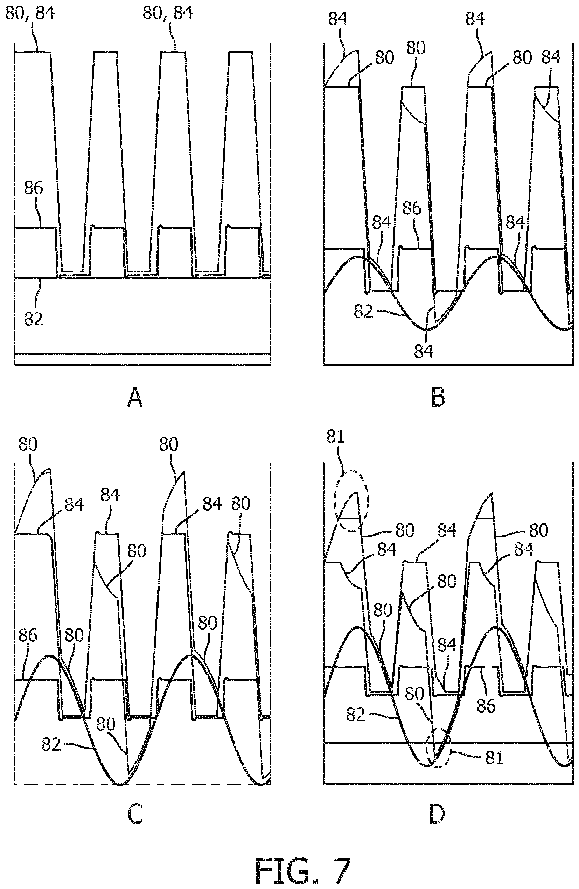

Figure 7 shows how the data signal is modified for different peak to peak voltage drops at the fixture and which applies to the implementations of both Figures 5 and 6.

Figure 7A shows no voltage drop on the neutral line, Figure 7B shows a voltage drop of 4V, Figure 7C shows a voltage drop of 8V and Figure 7D shows a voltage drop of 12V.

In each case, the plot 80 is the data signal generated at the local controller and provided on the data line including a suitable added compensating offset voltage waveform.

Plot 82 is the compensation signal function. It is proportional to the neutral line voltage drop and hence has the same shape and phase (hence the voltage drop signal is not shown separately).

The data signal has different shapes for different voltage drops as a result of the compensation implemented by the voltage offset waveform. Figure 7A is essentially the same as Figure 3A since no compensation is needed for a fixture with no neutral line voltage drop.

The shape becomes increasingly distorted with increasing voltage drop. For the maximum voltage drop in Figure 7D, the signal has cut off areas 81 where the desired data signal shape exceeds the voltage supply of the data source.

The compensation function is applied to all the fixtures, for example the modified data signal of Figure 7D would also be received by a nearest fixture at which there is no voltage drop (it would be seen as plot 80). This results in a worsened signal insofar as the nearest fixture is concerned, so the system balances the needs of the nearest and farthest fixtures when determining the compensation signal to be applied.

The voltage offset waveform 82 is in phase with the AC input voltage. It can be seen how the shape of voltage offset waveform is superposed over the square wave clean data signal. The voltage offset waveform can also be applied to compensate for a DC voltage drop.

The magnitude of the voltage offset waveform is proportional to the current being consumed, since this current determines the magnitude of the voltage drops.

The magnitude of the voltage offset waveform may for example be set at the average of the lowest and highest expected system voltage drops as measured at the set of fixtures.

The AC magnitude of the voltage offset waveform may in this way be set half way between that which would be ideal for the nearest and furthest fixtures (i.e. those with the lowest and highest expected voltage drops). The aim is to ensure signal integrity for the set of fixtures.

The waveform may be determined using feedback during installation as explained above or based on knowledge of the circuit topography.

The voltage drop between the live and neutral at the fixture could be an alternate method of determining the voltage drop in the neutral line between the local controller and the fixture.

Plot 84 is the data signal as seen by the fixture, which is derived from the difference between the local neutral line voltage and the data voltage (which remains essentially constant along the data line as a result of the small current needed).

Plot 86 is the data signal as reconstituted in the fixture, based on the threshold comparator operation.

In Figure 7, the data signal is again shown at its nominal frequency of 250 kb/sec and the frequency of the voltage drop is increased to 60 kHz for illustrative purposes.

It can be seen that the data signal is well reconstructed at all voltage drops.

The system may also be used to provide a diagnostic mode looking for unexpected voltage drops between subsequent fixtures that may be an indication of a poor or failing connection. This can be determined as part of the installation procedure.

To ensure that the signal is the best quality for all of the fixtures, the system may be configured so that the signal correction is at the average voltage drop between the lowest and highest values as experienced at all of the fixtures as a group. For example, if the voltage drop at fixture 1 is 0.50V (by which is meant half the peak-to-peak total excursion of the AC voltage drop signal) and the total voltage drop (sum of all voltage drops to that point) at the last fixture is 7.75V, then to ensure optimum signal reception at the fixtures, a correction voltage magnitude of 3.90V may be used. This will minimize the reconstructed signal distortion throughout the system.

The voltage drop across the system is dependent on the current through the cable and will change with the fixture outputs. The system thus applies a correction signal that is proportional to the current and hence the expected overall voltage drop.

The installation mode is able to determine the order of the fixtures in an installation based on the voltage offset at each fixture. For this purpose, the voltage drop at each fixture may be measured with the fixtures in the "full on" condition. The order of the fixtures in the run can then be determined by which have the largest voltage drops.

Furthermore, during installation of the fixtures, the voltage drop values for each fixture can be stored. A diagnostic routine can periodically check the voltage drop measurements for each fixture and may determine that some of the fixture interconnections are degrading and be able to provide advice that preventative maintenance should be undertaken.

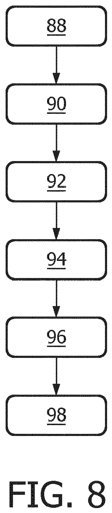

Figure 8 shows a method of powering a set of fixtures, each of which is connected to a cable including a power line, a reference line and a data line and positioned at different positions along the cable, powered by the local voltage difference between the power line and the reference line.

In step 88 there is an installation procedure, by which information about a suitable voltage offset waveform is determined. This for example comprises measuring the voltage drop on the reference line at each fixture.

In step 90, an AC power supply voltage is provided to the power line.

In step 92 a data signal is generated.

In step 94 a voltage offset waveform is added to the data signal which is dependent on the overall set of positions of the fixtures. It is also dependent on the current flowing along the reference line, either based on feedback or prediction.

In step 96 there is communication over the data line, wherein the data signal for a fixture is defined by the local voltage difference between the data signal on the data line and the reference line.

This invention may allow longer run lengths in new installations and my resolve intermittent problems encountered in existing installations when used as an upgrade.

An overall system may include one or more of the system controllers, as will for example be clear from the architecture shown in Figure 1.

The example above is based on setting a global data correction signal. In general, data packets are sent to all fixtures, which then select those data packets that are intended for them. The system could also adapt the correction signal for a specific fixture taking into account its specific location, in particular if it does not affect the system performance if the data packet is not then correctly received by the other fixtures.

The AC cable has been described above as having live, reference and data lines, There may additionally be a protective earth line.

The invention has been described above in connection with a lighting system, but it may be used in other control systems where communication is made with reference to a line of an AC cable on which significant currents flow in use (e.g. a mains power line or a reference neutral line).

As discussed above, the local controller makes use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform at the required functions. Various storage media may be fixed within a processor or controller or may be transportable, such that the one or more programs stored thereon can be loaded into a processor or controller.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A system controller (50) for powering and communicating with a set of fixtures using an AC cable comprising a power line (L), a reference line (N) and a data line (D), and adapted to communicate with fixtures (20) at different positions along the cable and each powered by the local voltage difference between the power line and the reference line, wherein the system controller comprises:
a control unit (52) for communicating with the set of fixtures by providing a data signal over the data line, wherein the data signal for a fixture is defined by the local voltage difference between the data signal on the data line and the reference line or power line; and
a compensation circuit (64;72) for adding a voltage offset waveform to the data signal which is dependent on the overall set of positions of the fixtures,
the system controller (50) **characterised in that** it further comprises a feedback system (62) for measuring a current flowing on the line to which the data signal is referenced, a gain controlled amplifier (64) which has a gain which is dependent on the measured current, and a modulating arrangement (56, 58) for modulating the data signal based on the output of the gain controlled amplifier (64).

2. A system controller as claimed in claim 1, wherein the voltage offset waveform is in phase with an AC power supply voltage provided to the power line.

3. A system controller as claimed in claim 1 or 2, wherein the voltage offset waveform compensates for a DC voltage drop on the line to which the data signal is referenced.

4. A system controller as claimed in any preceding claim, wherein the magnitude of the voltage offset waveform is:
proportional to the current flowing on the line to which the data signal is referenced; and/or
dependent on the average of the lowest and highest expected system voltage drop on the line to which the data signal is referenced at the set of fixtures.

5. A system controller as claimed in any preceding claim, wherein the control unit (52) is adapted to derive the voltage offset waveform based on the expected load and the phase of the input power line signal.

6. A system controller as claimed in any preceding claim, wherein the control unit (52) is adapted to implement an installation procedure, which comprises measuring the voltage drop on the line to which the data signal is referenced at each fixture.

7. A system controller as claimed in any preceding claim, wherein the control unit is adapted to implement a diagnostic mode for detecting voltages drops at each fixture.

8. A system comprising:
an AC cable comprising a power line (L), a reference line (N) and a data line (D);
a set of fixtures (20) at different positions along the cable and powered by the local voltage difference between the power line and the reference line; and
a system controller (50) as claimed in any preceding claim.

9. A system as claimed in claim 8, wherein the fixtures (20) comprise luminaires.

10. A method of powering a set of fixtures, each of which is connected to an AC cable comprising a power line (L), a reference line (N) and a data line (D) and positioned at different positions along the cable, powered by the local voltage difference between the power line and the reference line, wherein the method comprises:
(90) providing an AC power supply voltage to the power line;
(92) providing a data signal for communicating with the set of fixtures;
(94) adding a voltage offset waveform to the data signal which is dependent on the overall set of positions of the fixtures thereby to modify the data signal, the method **characterised in that** the step of (94) adding a voltage offset waveform further comprises measuring a current flowing on the line to which the data signal is referenced, amplifying a signal with a gain which is dependent on the measured current, and using the amplified signal to derive the voltage offset waveform; and
(96) providing the modified data signal over the data line, wherein the data signal for a fixture is defined by the local voltage difference between the data signal on the data line and the reference line or power line.

11. A method as claimed in claim 10, comprising adding a voltage offset waveform which is in phase with the AC power supply voltage.

12. A method as claimed in claim 10 or 11, comprising setting a magnitude of a peak of the voltage offset waveform to be proportional to the current flowing on the line to which the data signal is referenced.

13. A method as claimed in any one of claims 9 to 12, further comprising implementing an installation procedure, by measuring the voltage drop on the line to which the data signal is referenced at each fixture.

## Patentansprüche

1. Systemsteuereinheit (50) zum Versorgen eines und Kommunizieren mit einem Satz von Halterungen unter Verwendung eines Wechselstromkabels, umfassend eine Stromleitung (L), eine Vergleichsleitung (N) und eine Datenleitung (D), und adaptiert zum Kommunizieren mit Halterungen (20) an verschiedenen Positionen entlang des Kabels und jeweils versorgt durch die lokale Spannungsdifferenz zwischen der Stromleitung und der Vergleichsleitung, wobei die Systemsteuereinheit umfasst:
eine Steuereinheit (52) zum Kommunizieren mit dem Satz von Halterungen durch Bereitstellen eines Datensignals über die Datenleitung, wobei das Datensignal für eine Halterung durch die lokale Spannungsdifferenz zwischen dem Datensignal in der Datenleitung und der Vergleichsleitung oder Stromleitung definiert ist; und
eine Kompensationsschaltung (64; 72) zum Hinzufügen einer Spannungsversatzwellenform zu dem Datensignal, welche von dem gesamten Satz von Positionen der Halterungen abhängig ist,
wobei die Systemsteuereinheit (50) **dadurch gekennzeichnet ist, dass** sie weiter ein Rückmeldesystem (62) zum Messen eines Stroms, welcher in der Leitung fließt, auf welche das Datensignal bezogen ist, einen verstärkungsgeregelten Verstärker (64), welcher eine Verstärkung umfasst, welche von dem gemessenen Strom abhängig ist, und eine Modulationsanordnung (56, 58) zum Modulieren des Datensignals auf Basis der Ausgabe des verstärkungsgeregelten Verstärkers (64) umfasst.

2. Systemsteuereinheit nach Anspruch 1, wobei die Spannungsversatzwellenform phasengleich mit einer Wechselspannungsstromversorgungspannung ist, welche für die Stromleitung bereitgestellt ist.

3. Systemsteuereinheit nach Anspruch 1 oder 2, wobei die Spannungsversatzwellenform einen Gleichspannungsabfall in der Leitung kompensiert, auf welche das Datensignal bezogen ist.

4. Systemsteuereinheit nach einem der vorstehenden Ansprüche, wobei die Größenordnung der Spannungsversatzwellenform:
proportional zu dem Strom ist, welcher in der Leitung fließt, auf welche das Datensignal bezogen ist; und/oder
abhängig von dem Durchschnitt des niedrigsten und höchsten erwarteten Systemspannungsabfalls in der Leitung ist, auf welchen das Datensignal an dem Satz von Halterungen bezogen ist.

5. Systemsteuereinheit nach einem der vorstehenden Ansprüche, wobei die Steuereinheit (52) adaptiert ist, die Spannungsversatzwellenform auf Basis der erwarteten Last und der Phase des Eingangssignals der Stromleitung abzuleiten.

6. Systemsteuereinheit nach einem der vorstehenden Ansprüche, wobei die Steuereinheit (52) adaptiert ist, einen Installationsvorgang zu implementieren, welcher Messen des Spannungsabfalls in der Leitung adaptiert ist, auf welche das Datensignal an der jeweiligen Halterung bezogen ist.

7. Systemsteuereinheit nach einem der vorstehenden Ansprüche, wobei die Steuereinheit adaptiert ist, einen Diagnosemodus zum Erkennen von Spannungsabfällen an jeder Halterung zu implementieren.

8. System, umfassend:
ein Wechselstromkabel, umfassend eine Stromleitung (L), eine Vergleichsleitung (N) und eine Datenleitung (D);
einen Satz von Halterungen (20) an unterschiedlichen Positionen entlang des Kabels und versorgt durch die lokale Spannungsdifferenz zwischen der Stromleitung und der Vergleichsleitung; und
eine Systemsteuereinheit (50) nach einem der vorstehenden Ansprüche.

9. System nach Anspruch 8, wobei die Halterungen (20) Leuchten umfassen.

10. Verfahren zum Versorgen eines Satzes von Halterungen, welche jeweils mit einem Wechselstromkabel verbunden sind, umfassend eine Stromleitung (L), eine Vergleichsleitung (N) und eine Datenleitung (D), und positioniert an verschiedenen Positionen entlang des Kabels, versorgt durch die lokale Spannungsdifferenz zwischen der Stromleitung und der Vergleichsleitung, wobei das Verfahren umfasst:
(90) Bereitstellen einer Wechselspannungsstromversorgungspannung für die Stromleitung;
(92) Bereitstellen eines Datensignals zum Kommunizieren mit dem Satz von Halterungen;
(94) Hinzufügen einer Spannungsversatzwellenform zu dem Datensignal, welche von dem gesamten Satz von Positionen der Halterungen abhängig ist, um dadurch das Datensignal zu modifizieren, wobei das Verfahren **dadurch gekennzeichnet ist, dass** der Schritt des (94) Hinzufügens einer Spannungsversatzwellenform weiter Messen eines Stroms, welcher in der Leitung fließt, auf welche das Datensignal bezogen ist, Verstärken eines Signals mit einer Verstärkung, welche von dem gemessenen Strom abhängig ist, und Verwenden des verstärkten Signals zum Ableiten der Spannungsversatzwellenform umfasst; und
(96) Bereitstellen des modifizierten Datensignals über die Datenleitung, wobei das Datensignal für eine Halterung durch die lokale Spannungsdifferenz zwischen dem Datensignal in der Datenleitung und der Vergleichsleitung oder Stromleitung definiert ist.

11. Verfahren nach Anspruch 10, umfassend Hinzufügen einer Spannungsversatzwellenform, welche phasengleich mit der Wechselspannungsstromversorgungspannung ist.

12. Verfahren nach Anspruch 10 oder 11, umfassend Festlegen einer Größenordnung einer Spitze der Spannungsversatzwellenform, welche proportional zu dem Strom sein soll, welcher in der Leitung fließt, auf welche das Datensignal bezogen ist.

13. Verfahren nach einem der Ansprüche 9 bis 12, weiter Implementieren eines Installationsvorgangs durch Messen des Spannungsabfalls in der Leitung umfassend, auf welche das Datensignal an der jeweiligen Halterung bezogen ist.

## Revendications

1. Dispositif de commande de système (50) pour alimenter et communiquer avec un ensemble d'appareils en utilisant un câble CA comprenant une ligne d'alimentation (L), une ligne de référence (N) et une ligne de données (D) et qui est à même de communiquer avec des appareils (20) dans différentes positions le long du câble et chacun alimenté par la différence de tension locale entre la ligne d'alimentation et la ligne de référence, dans lequel le dispositif de commande de système comprend :
une unité de commande (52) pour communiquer avec l'ensemble d'appareils en fournissant un signal de données via la ligne de données, dans lequel le signal de données pour un appareil est défini par la différence de tension locale entre le signal de données sur la ligne de données et la ligne de référence ou la ligne d'alimentation ; et
un circuit de compensation (64 ; 72) pour ajouter une forme d'onde à tension décalée au signal de données qui dépend de l'ensemble global de positions des appareils, le dispositif de commande de système (50) étant **caractérisé en ce qu'**il comprend en outre un système de rétraction (62) pour mesurer un courant s'écoulant sur la ligne à laquelle le signal de données est référencé, un amplificateur à gain commandé (64) qui a un gain qui dépend du courant mesuré et un agencement de modulation (56, 58) pour moduler le signal de données sur la base de la sortie de l'amplificateur à gain commandé (64).

2. Dispositif de commande de système selon la revendication 1, dans lequel la forme d'onde à tension décalée est en phase avec une tension d'alimentation CA fournie à la ligne d'alimentation.

3. Dispositif de commande de système selon la revendication 1 ou 2, dans lequel la forme d'onde à tension décalée compense une chute de tension CC sur la ligne à laquelle le signal de données est référencé.

4. Dispositif de commande de système selon l'une quelconque des revendications précédentes, dans lequel la grandeur de la forme d'onde à tension décalée est :
proportionnelle au courant s'écoulant sur la ligne à laquelle le signal de données est référencé ; et/ou
dépendante de la moyenne des chutes de tension de système attendues la plus basse et la plus élevée sur la ligne à laquelle le signal de données est référencé dans l'ensemble d'appareils.

5. Dispositif de commande de système selon l'une quelconque des revendications précédentes, dans lequel l'unité de commande (52) est à même de déduire la forme d'onde à décalage de tension sur la base de la charge attendue et de la phase du signal de ligne d'alimentation d'entrée.

6. Dispositif de commande de système selon l'une quelconque des revendications précédentes, dans lequel l'unité de commande (52) est à même de mettre en œuvre une procédure d'installation qui comprend la mesure de la chute de tension sur la ligne à laquelle le signal de données est référencé dans chaque appareil.

7. Dispositif de commande de système selon l'une quelconque des revendications précédentes, dans lequel l'unité de commande est à même de mettre en oeuvre un mode de diagnostic pour détecter des chutes de tension dans chaque appareil.

8. Système comprenant :
un câble CA comprenant une ligne d'alimentation (L), une ligne de référence (N) et une ligne de données (D) ;
un ensemble d'appareils (20) dans différentes positions le long du câble et alimentés par la différence de tension locale entre la ligne d'alimentation et la ligne de référence ; et
un dispositif de commande de système (50) selon l'une quelconque des revendications précédentes.

9. Système selon la revendication 8, dans lequel les appareils (20) comprennent des luminaires.

10. Procédé d'alimentation d'un ensemble d'appareils, dont chacun est connecté à un câble CA comprenant une ligne d'alimentation (L), une ligne de référence (N) et une ligne de données (D) et positionnés dans différences positions le long du câble, alimentés par la différence de tension locale entre la ligne d'alimentation et la ligne de référence, dans lequel le procédé comprend :
(90) la fourniture d'une tension d'alimentation CA à la ligne d'alimentation ;
(92) la fourniture d'un signal de données pour la communication avec l'ensemble d'appareils ;
(94) l'addition d'une forme d'onde à tension décalée au signal de données qui dépend de l'ensemble global de positions des appareils, en sorte de modifier le signal de données, le procédé étant **caractérisé en ce que** l'étape (94) d'addition d'une forme d'onde à tension décalée comprend en outre la mesure d'un courant s'écoulant sur la ligne à laquelle le signal de données est référencé, l'amplification d'un signal avec un gain qui dépend du courant mesuré et l'utilisation du signal amplifié pour déduire la forme d'onde à tension décalée ; et
(96) la fourniture du signal de données modifié via la ligne de données, dans lequel le signal de données pour un appareil est défini par la différence de tension locale entre le signal de données sur la ligne de données et la ligne de référence ou la ligne d'alimentation.

11. Procédé selon la revendication 10, comprenant l'addition d'une forme d'onde à tension décalée qui est en phase avec la tension d'alimentation CA.

12. Procédé selon la revendication 10 ou 11, comprenant le réglage d'une grandeur d'un pic de la forme d'onde à tension décalée pour qu'elle soit proportionnelle au courant s'écoulant sur la ligne à laquelle le signal de données est référencé.

13. Procédé selon l'une quelconque des revendications 9 à 12, comprenant en outre la mise en œuvre d'une procédure d'installation en mesurant la chute de tension sur la ligne à laquelle le signal de données est référencé dans chaque appareil.
